# EUROPEAN PATENT SPECIFICATION

(11) **EP 2 981 724 B1**
(45) Date of publication and mention of the grant of the patent: **30.05.2018**
(21) Application number: 13715893.7
(22) Date of filing: 05.04.2013
(51) Int. Cl.: F16C 11/06, F16C 23/04

(54) **SPHERICAL BEARING AND METHOD OF MAKING THE SAME**
KUGELLAGER UND VERFAHREN ZUR HERSTELLUNG DAVON
ROULEMENT À ROTULE ET SON PROCÉDÉ DE FABRICATION

(43) Date of publication of application: 10.02.2016
(73) Proprietor: Schaublin SA, 2800 Delémont (CH)
(72) Inventor: MONNIN, Alain, CH-2822 Courroux (CH); CASSARD, David, F-25230 Seloncout (FR)
(74) Representative: Seemann & Partner Patentanwälte mbB
(86) International application number: PCT/EP2013/001008
(87) International publication number: WO 2014/161560

(56) References cited:
- GB-A- 811 503
- GB-A- 1 018 719
- US-A- 3 107 954
- US-A- 5 073 038

## Description

### Field of the Invention

The present invention relates to a spherical bearing. More specifically, the present invention relates to a spherical plain bearing having a split inner ring and an outer ring configured to receive two or more sections of the split inner ring.

### Background of the Invention

Spherical bearings typically have an outer ring having a concave arcuate bearing surface and an inner ring having a convex arcuate bearing surface. The inner ring is typically disposed in a bore defined by the outer ring and is rotatable relative thereto about a first axis of rotation, and is angularly displaceable relative thereto. In some types of spherical bearings the inner ring is replaceable during the useful life of the bearing. To accomplish this, an existing inner ring is removed from the bore in the outer ring through a first opening and a new inner ring is inserted through the first opening into the bore.

The diameter of the first opening of the bore is typically less than the outside diameter of the inner ring, thus impeding replacement of the inner ring. To overcome this problem, it is known to use an inner ring having two or more sections. This type of bearing may be referred to as a split ring spherical bearing. This design facilitates replacement of the inner ring because the individual sections, typically halves, of the inner ring can be individually inserted through the first opening of the bore and assembled therein.

One problem with such split ring spherical bearings is that they require sufficient clearance between the convex arcuate bearing surface of the inner ring and the concave arcuate bearing surface of the outer ring in order to facilitate installation and assembly. This required clearance results in a relatively large axial clearance between the outer ring and the inner ring. Axial clearance can be defined as the linear distance between an end of the outer ring at an edge of the first opening and the convex arcuate bearing surface of the inner ring along an axis parallel to the axis of rotation. A large axial clearance is a disadvantage for a number of reasons. First, a larger axial clearance facilitates the flow of foreign objects from an area outside the bearing to an area inside the bearing thereby increasing wear of the bearing surfaces. Likewise, a large axial clearance facilitates the egress of lubricant from the area inside the bearing between inner ring and outer ring, referred to sometimes as the friction zone or sliding surfaces, to an area outside of the bearing. Another disadvantage of known spherical bearing configurations is that they may result in a single contact point between the convex arcuate bearing surface of the inner ring and the concave arcuate bearing surface of the outer ring when the surfaces are in contact. This may facilitate egress of lubricant from the friction zone, and increases stress on spherical bearing, thereby decreasing its useful life.

The document US 5,073,038 discloses a ball and socket bearing having a spherical ball member positioned within a non-metallic, molded bearing material which is in turn molded within a socket formed in a socket member. The socket provides openings on either side of the equator of the ball member having a radius less than the radius of the equator of the ball member so that a metal-to-metal interference prevents lateral separation of the members even in the event of bearing material failure. Further, the bearing material is relatively thin, at least between the ball member and socket adjacent to the lateral opening, so that the bearing material can support high lateral loads.

### Summary of the Invention

The object of the invention is to provide an improved bearing, wherein in particular the bearing can be mounted and an axial clearance between the inner and the outer rings of the bearing can be reduced.

The object is solved by the features of claim 1.

A first aspect of the bearing is not part of the invention. In this aspect, the bearing has an outer ring defining a concave arcuate bearing surface having a radius of curvature R_{O} in an axial cross section of the bearing. The bearing has an inner ring defining a convex arcuate bearing surface having a radius of curvature R_{I} in the axial cross section of the bearing. The inner ring is rotatable relative to the outer ring about a first axis of rotation and the inner ring is angularly displaceable relative to the outer ring when the inner ring is disposed in the outer ring. The concave arcuate bearing surface is radially displaced from the convex arcuate bearing surface by a distance A at an axial center of the bearing when the inner ring is concentric with the outer ring. Ro is less than the sum of R_{I} and A.

In some embodiments of the first aspect, the inner ring comprises two or more sections, in yet further embodiments, the inner ring comprises two halves and the bearing is referred to as a split ring spherical bearing. In yet further embodiments, the distance A is such that the two or more sections of the inner ring can be inserted through a first opening in a bore of the outer ring and can be disposed in the bore of the outer ring.

In yet further embodiments the bearing has an axial clearance Y defined as a distance along an axis parallel to the axis of rotation between an end of the concave arcuate bearing surface of the outer ring and the convex arcuate bearing surface. In yet further embodiments , the axial clearance Y is less than a clearance of a spherical bearing wherein R_{O} is equal to the sum of R_{I} and A. In yet further embodiments R_{O} is less than R_{I}. In certain disclosed embodiments, the axial clearance Y is at least 10% less than an axial clearance of a spherical bearing wherein R_{O} equals the sum of R_{I} and A. In such embodiments, a crescent shaped void is defined between the concave arcuate bearing surface and the convex arcuate bearing surface between two points of contact between the concave arcuate bearing surface and the convex arcuate bearing surface.

In another aspect according to the invention, a bearing has an outer ring defining a concave arcuate bearing surface having a radius of curvature R_{O} in an axial cross section of the bearing. The bearing includes an inner ring defining a convex arcuate bearing surface having a radius of curvature R_{I} in the axial cross section of the bearing, R_{O} being less than R_{I}. The inner ring is rotatable relative to the outer ring about a first axis of rotation and the inner ring is angularly displaceable relative to the outer ring when the inner ring is disposed in the outer ring. The inner ring has a first half and a second half.

According to the invention, the concave arcuate bearing surface is radially displaced from the convex arcuate bearing surface by a distance A at an axial center of the bearing when the inner ring is concentric with the outer ring. In yet further embodiments, the distance A is defined to enable the first half and the second half of the inner ring to be inserted through a first opening in a bore of the outer ring.

Moreover, a method of assembling a bearing, not part of the invention, is provided. The method includes the steps of providing an outer ring defining a concave arcuate bearing surface having a radius of curvature R_{O} in an axial cross section of the bearing, and providing an inner ring defining a convex arcuate bearing surface having a radius of curvature R_{I} in the axial cross section of the bearing, R_{O} being less than R_{I}, the inner ring comprising a first half and a second half. The method further includes the steps of disposing the first half of the inner ring in the outer ring, and disposing the second half of the inner ring in the outer ring. The inner ring is rotatable relative to the outer ring about a first axis of rotation and the inner ring is angularly displaceable relative to the outer ring when the inner ring is disposed in the outer ring.

### Brief Description of the Drawings

FIG. 1 is a front view of a fitting.
FIG. 2 is a side view of the fitting shown in FIG. 1.
FIG. 3 is a cross-sectional view of a portion of the fitting shown in FIG. 1 in which a spherical bearing is shown.
FIG. 4 is a cross-sectional view of a portion of the fitting shown in FIG. 1 in which a spherical bearing is shown.
FIG. 5A is a cross-sectional view of a portion of a spherical bearing.
FIG. 5B is a cross-sectional view of a portion of a spherical bearing.
FIG. 5C is a cross-sectional view of a portion of a spherical bearing.
FIG. 6A is a cross-sectional view of a portion of the spherical bearing shown in FIG. 5A, wherein the bearing is under a load.
FIG. 6B is a cross-sectional view of a portion of the spherical bearing shown in FIG. 5B wherein the bearing is under a load.
FIG. 6C is a cross-sectional view of a portion of the spherical bearing shown in FIG. 5C wherein the bearing is under a load.

### Detailed Description of the Invention

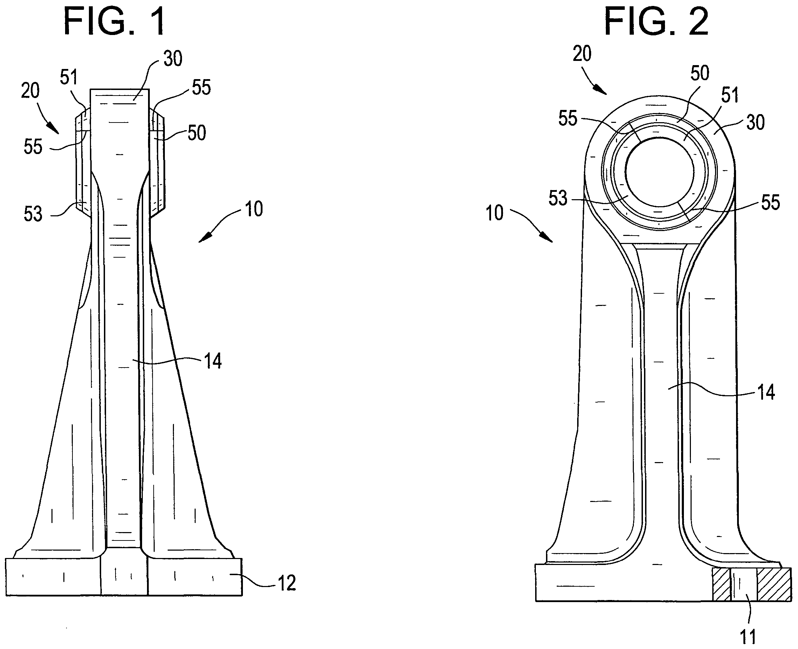

In reference to FIGS. 1-4, a fitting 10 is shown. The fitting 10 includes a base 12, an arm 14, and a spherical bearing 20. The arm 14 extends between the base 12 and the spherical bearing 20 along an axis of the fitting 10. The base 12 includes one or more holes 11 for receiving fasteners (not shown in the FIGS.) for securing the fitting 10 to another structure (not shown in the FIGS.).

The spherical bearing 20 includes an outer ring 30 and an inner ring 50. The inner ring 50 is disposed in the outer ring 30. In the embodiment shown in FIGS. 1-4, the arm 12 and the outer ring 30 are a uniform structure; however, the embodiment is not limited in this regard. For example, as will be understood by a person of ordinary skill in the art familiar with this disclosure, the arm 12 may comprise a housing for receiving an outer ring of a spherical bearing. It should further be understood by a person of ordinary skill in the art familiar with this disclosure that the embodiment is directed to the spherical bearing 20 shown in the FIGS. The fitting 10 is shown for illustrative purposes only and is not intended to limit the presently disclosed inventive spherical bearing for use with such structures. For example, some embodiments do not include such a fitting, and yet in other embodiments the fitting may have an entirely different shape than the fitting 10 disclosed in FIGS. 1-4.

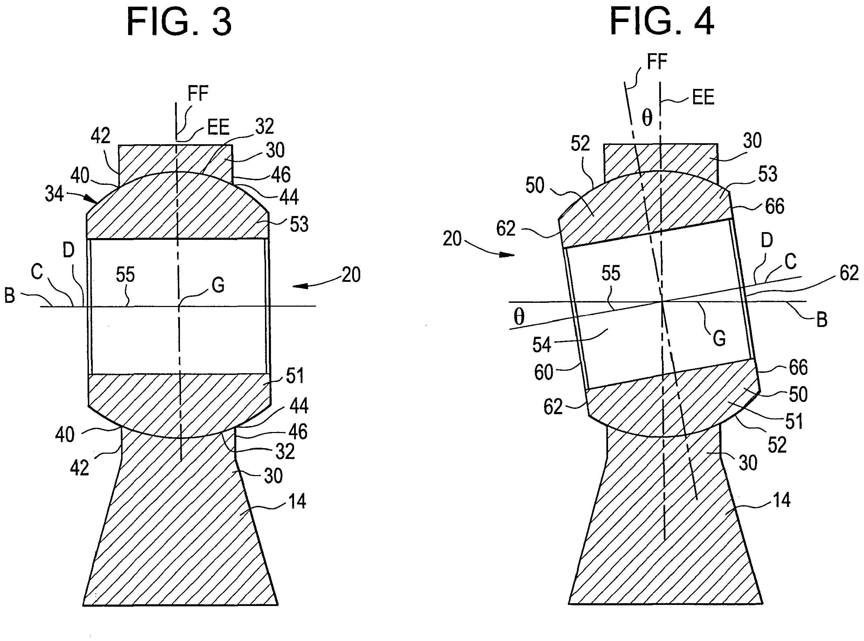

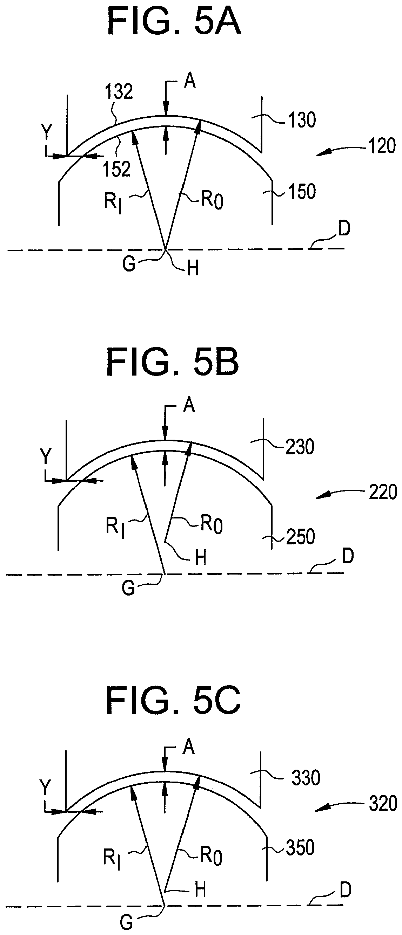

In reference to FIG. 3, the outer ring 30 defines a concave arcuate bearing surface 32. As shown in FIGS. 5A-5C, the concave arcuate bearing surface 32 has a radius of curvature R_{O} in an axial cross section of the spherical bearing 20. The concave arcuate bearing surface 32 defines a bore 34 that extends through the outer ring 30 between a first opening 40 and a second opening 44. The outer ring 30 extends between a first end 42 and a second end 46. The first opening 40 is in the first end 42 and the second opening 44 is in the second end 46.

The outer ring 30 is made from Titanium TA6V, however, it should be understood that the outer ring 30 may be made from any material known in the art and it is not limited to the disclosed Titanium. In some embodiments, a surface treatment may be applied to the concave arcuate bearing surface 32 to protect that surface during the life of the bearing 20. In yet other embodiments, a self-lubricating material may be applied to the concave arcuate bearing surface 32, for example PTFE or PTFE embedded in a woven material. In yet other embodiments, the concave arcuate bearing surface 32 is untreated and no coating is applied. It should be understood to a person having ordinary skill in the art familiar with this disclosure that the portions of the disclosed embodiment relating to the outer ring 30 material and treatment or coating thereof are for illustration purposes and are not intended to limit the embodiments.

In reference to FIG. 4, the inner ring 50 defines a convex arcuate bearing surface 52. As shown in FIGS. 5A-5C, the convex bearing surface 52 has a radius of curvature R_{I} in an axial cross section of the spherical bearing 20. The inner ring 50 extends between a first end 62 and a second end 66. The inner ring 50 includes a bore 54 that extends between a first opening 60 in the first end 62 and a second opening 64 in the second end 66. The cross section of the bore 54 is configured to receive a shaft (not shown in the FIGS.).

The inner ring 50 is made from Titanium TA6V, however, it should be understood that the inner ring 50 may be made from any material known in the art and it is not limited to the disclosed Titanium. In some embodiments, a surface treatment is applied to the convex arcuate bearing surface 52 to protect that surface during use of the bearing 20. In yet other embodiments, a self-lubricating material may be applied to the convex arcuate bearing surface 52. In yet other embodiments, the convex arcuate bearing surface 52 is untreated and no coating is applied. It should be understood to a person having ordinary skill in the art and familiar with this disclosure that the portions of the disclosed embodiment relating to the inner ring 50 material and treatment or coating thereof are for illustration purposes only and are not intended to limit the present embodiment.

In reference to FIGS. 3 and 4, the bore 34 of the outer ring 50 extends along a bore axis B. The bore 54 of the inner ring 50 extends along a bore axis C. The inner ring 50 has a first axis of rotation D. The inner ring 50 is rotatable relative to the outer ring 30 about the first axis of rotation D. The inner ring 50 is angularly displaceable relative to the outer ring 30. The outer ring 30 has an axial center plane EE between the first edge 42 and the second edge 46 of the outer ring 30. The inner ring 50 has an axial center plane FF between the first edge 62 and the second edge 66 of the inner ring 50.

In reference to FIG. 3, the outer ring 30 is angularly aligned relative to the inner ring 50. In this position, the outer ring 30 bore axis B is substantially coaxial with the inner ring 50 bore axis C, which is also substantially coaxial with the first axis of rotation D. In reference to FIG. 4, the inner ring 50 is angularly displaced relative to the outer ring 30 by an angle θ. In this position, the axial center plane EE of the outer ring 30 is angularly displaced from the axial center plane FF of the inner 50 by the angle θ. The axial plane EE intersects with the axial plane FF at an approximate center point G of the spherical bearing 20. In this position, the bore axis C of the inner ring 50 and the first axis of rotation D remain coaxial, but are angularly displaced from the bore axis B of the outer ring 30 by the angle θ. The bore axis C and the first axis of rotation D intersect with bore axis B at the approximate center point G. It should be understood that although the bore axis C of the inner ring 50 and the first axis of rotation D are shown as being coaxial, the embodiment is not limited in this regard. For example, the bore axis C and the first axis of rotation D may be parallel, or have any other configuration operable with the spherical bearing 20.

In the embodiment shown in FIGS. 1-4, the inner ring 50 comprises two sections 51 and 53. This configuration is commonly referred to as a split ring spherical bearing. In the embodiment shown in FIGS. 1-4, the fracture between the two sections 51 and 53 is represented by line 55. Although a split ring configuration is shown, the embodiment is not limited in this regard. For example, the inner ring 50 may comprise a single uniform section, or the inner ring 50 may comprise more than two sections. A split ring configuration is preferred to facilitate assembly of the spherical bearing 20. Typically, the diameter of the first opening 40 and the diameter of the second opening 44 of the bore 34 is less than an outer diameter of the inner ring 50, thereby by inhibiting insertion if the inner ring 50 through the first opening 40 an into the bore 34 defined by the outer ring 30. In order to overcome this problem (and as discussed in the Background), it is known to split the inner ring 50 into two or more sections 51, 53. This allows for each section to be individually inserted through either the first opening 40 or the second opening 44 and assembled in the bore 34.

A problem with such split ring spherical bearings is that they require a minimum clearance between the convex arcuate bearing surface 52 and the convex arcuate bearing surface 32 as determined at the axial center plane EE when the first axis of rotation D, the bore axis C, and the bore axis B are coaxial. In reference to FIG. 5A, this clearance is indicated by distance A. In FIG. 5A, a spherical bearing 120 in accordance with the prior art is shown. In this spherical bearing 120, the concave arcuate bearing surface 132 has a radius of curvature R_{O} in an axial cross section of the bearing 120. The convex arcuate bearing surface 152 has a radius of curvature R_{I} in the axial cross section of the bearing 120. In the embodiment disclosed in FIG. 5A, R_{O} is equal to the sum of R_{I} and A. This configuration results in an axial clearance Y between the outer ring 130 and the inner ring 150. Specifically, in this embodiment, and those discussed below, the axial clearance is the linear distance between an edge of the first opening 140 and the convex arcuate bearing surface 152 along an axis parallel to the axis of rotation D.

In reference to 6A, an illustration of the spherical bearing 120 shown in FIG. 5A is provided. In this configuration the outer ring 130 is subject to a loading force F₁ and the inner ring 150 is subject to a loading force F₂, as a result of the loading force and the geometry of the bearing surface 132, 152 the outer ring 130 and the inner ring 150 contact each other at a single point 170.

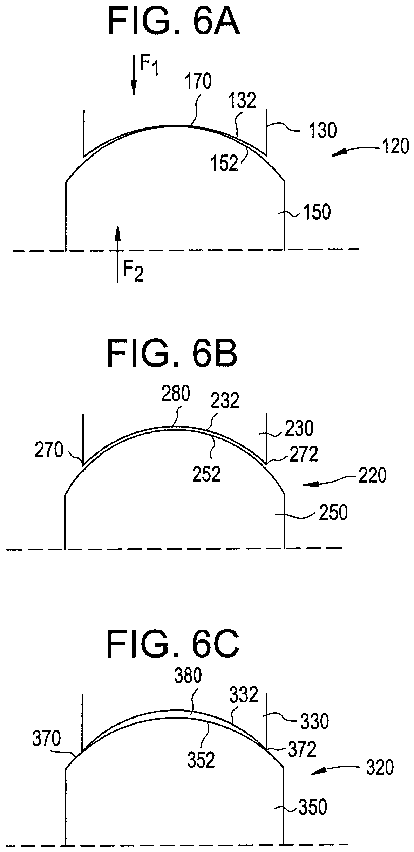

In reference to FIG. 5B, a spherical bearing 220 is shown. In this spherical bearing 220, the concave arcuate bearing surface 232 has a radius of curvature R_{O} in an axial cross section of the bearing 220. The convex arcuate bearing surface 252 has a radius of curvature R_{I} in the axial cross section of the bearing 220. In the embodiment disclosed in FIG. 5B, Ro is less than the sum of R_{I} and A. As a result of this configuration, the center point G of the radius of curvature R_{O} is radially displaced from the center point H of the radius of curvature R_{I}. This configuration results an axial clearance Y that is less than the axial clearance Y in the spherical bearing 120 shown in FIG. 5A, 6A in which R_{O} is equal to the sum of R_{I} and A.

In reference to 6B, an illustration of the spherical bearing 220 shown in FIG. 5B is provided. In this illustration, the outer ring 230 is subject to a loading force F₁ and the inner ring 150 is subject to a loading force F₂. As a result of the loading forces and the geometry of the bearing surface 232, 252, the outer ring 230 and the inner ring 250 contact each other at two points 270, 272. This is a result of the fact that R_{O} is less than the sum of R_{I} and A. Providing two contact points 270, 272 reduce stress on the inner and outer ring 230, 250 thereby increasing the useful life of the bearing 220. In addition, a crescent shaped pocket 280 is formed between the contact points 270, 272 between the outer ring 230 and the inner ring 250. The pocket 280 facilitates retention of lubricant in the zone between the outer ring 230 and the inner ring 250.

In reference to FIG. 5C, a spherical bearing 320 is shown. In this spherical bearing 320, the concave arcuate bearing surface 332 has a radius of curvature R_{O} in an axial cross section of the bearing 320. The convex arcuate bearing surface 352 has a radius of curvature R_{I} in the axial cross section of the bearing 320. In the embodiment disclosed in FIG. 5C, Ro is less than R_{I}. As a result of this configuration, the center point G of the radius of curvature R_{O} is radially displaced from the center point H of the radius of curvature R_{I}. This configuration results an axial clearance Y that is less than the axial clearance Y in the spherical bearing 120 shown in FIG. 5A, 6A in which R_{O} is equal to the sum of R_{I} and A, and an axial clearance Y that is less than the axial clearance Y in the spherical bearing 220 shown in FIGS. 5B, 6B in which in which R_{O} is less than the sum of R_{I} and A (assuming R_{O} is greater than R_{I} in this embodiment, which it is not limited to).

In reference to 6C, an illustration of the spherical bearing 320 shown in FIG. 5C is provided. The outer ring 330 is subject to a loading force F₁ and the inner ring 350 is subject to a loading force F₂. As a result of the loading forces and the geometry of the bearing surfaces 332, 352, the outer ring 330 and the inner ring 350 contact each other at two points 370, 372. This is a result of the fact that R_{O} is less than R_{I}. Providing two contact points 370, 372 reduces stress on the inner and outer ring 330, 350 thereby increasing the useful life of the bearing 320. In addition, a crescent shaped pocket 380 is formed between the contact points 370, 372 between the outer ring 330 and the inner ring 350. The pocket 380 facilitates retention of lubricant in the sliding zone between the outer ring 330 and the inner ring 350.

In some embodiments, the radii of curvature of the respective rings of the bearing are configured so that Y is at least 10% less than an axial clearance of a similar bearing wherein R_{O} equals the sum of R_{I} and A. In yet further embodiments, the radii of curvature of the respective rings of the bearing are configured so that Y is at least 16% less than an axial clearance of a similar bearing wherein Ro equals the sum of R_{I} and A.

Although the present invention has been disclosed and described with reference to certain embodiments thereof, it should be noted that other variations and modifications may be made, and it is intended that the following claims cover the variations and modifications within the true scope of the invention.

## Claims

1. A bearing (20, 220, 320) comprising:
an outer ring (30, 230, 330) defining a concave arcuate bearing surface (32, 232, 332) defining a bore (34) and having a radius of curvature (Ro) in an axial cross section of the bearing (20, 220, 320);
**characterized in that**
an split inner ring (50) is formed by a first half (53) and a second half (51) separated from one another by a fracture line (55), the split inner ring (50) defining a convex arcuate bearing surface (52, 252, 352) having a radius of curvature (R_{I}) in the axial cross section of the bearing (20, 220, 320), the inner ring being rotatable relative to the outer ring (30, 230, 330) about a first axis of rotation and the inner ring being angularly displaceable relative to the outer ring (30, 230, 330) when the inner ring is disposed in the outer ring (30, 230, 330);
wherein a crescent shaped void configured for retention of a lubricant is defined between the concave arcuate bearing surface (32, 232, 332) and the convex arcuate bearing surface (52, 252, 352) between two points of contact (270, 272 and 370, 372) between the concave arcuate bearing surface (32, 232, 332) and the convex arcuate bearing surface (52, 252, 352) when the outer ring (30, 230, 330) and the split inner ring (50) are subject to loading forces (F1, F2);
wherein the concave arcuate bearing surface (32, 232, 332) is radially displaced from the convex arcuate bearing surface (52, 252, 352) by a distance (A) at an axial center of the bearing (20, 220, 320) when the split inner ring (50) is concentric with the outer ring (30, 230, 330);
wherein the distance (A) is defined to enable the first half (53) and the second half (51) of the split inner ring (50) to be inserted through a first opening (40) in the bore (34) of the outer ring (30, 230, 330);
wherein an axial clearance (Y) is defined as the distance between an end of the concave arcuate bearing surface (32, 232, 332) and the convex arcuate bearing surface (32, 232, 332) along an axis parallel to the axis of rotation;
wherein the radius of curvature (Ro) of the concave arcuate bearing surface is less than the radius of curvature (R_{I}) of the convex arcuate bearing surface and
wherein the axial clearance is less than the axial clearance of a spherical bearing wherein the radius of curvature (Ro) of the concave arcuate bearing surface is equal to or greater than the radius of curvature (R_{I}) of the convex arcuate bearing surface.

## Patentansprüche

1. Lager (20, 220, 320), das Folgendes umfasst:
einen Außenring (30, 230, 330), der eine konkave bogenförmige Lagerfläche (32, 232, 332) definiert, die eine Bohrung (34) definiert und einen Krümmungsradius (Ro) in einem axialen Querschnitt des Lagers (20, 220, 320) aufweist;
**dadurch gekennzeichnet, dass** ein geteilter Innenring (50) durch eine erste Hälfte (53) und eine zweite Hälfte (51) gebildet ist, die durch eine Bruchlinie (55) voneinander getrennt sind, wobei der geteilte Innenring (50) eine konvexe bogenförmige Lagerfläche (52, 252, 352) definiert, die einen Krümmungsradius (R_{I}) im axialen Querschnitt des Lagers (20, 220, 320) aufweist, wobei der Innenring in Bezug auf den Außenring (30, 230, 330) um eine erste Drehachse drehbar ist und der Innenring winklig in Bezug zu dem Außenring (30, 230, 330) verschiebbar ist, wenn der Innenring in dem Außenring (30, 230, 330) angeordnet ist;
wobei ein sichelförmiger Hohlraum, der zum Halten eines Schmiermittels ausgestaltet ist, zwischen der konkaven bogenförmigen Lagerfläche (32, 232, 332) und der konvexen bogenförmigen Lagerfläche (52, 252, 352) zwischen zwei Kontaktpunkten (270, 272 und 370, 372) zwischen der konkaven bogenförmigen Lagerfläche (32, 232, 332) und der konvexen bogenförmigen Lagerfläche (52, 252, 352) definiert ist, wenn der Außenring (30, 230, 330) und der geteilte Innenring (50) Belastungskräften (F1, F2) ausgesetzt sind;
wobei die konkave bogenförmige Lagerfläche (32, 232, 332) radial von der konvexen bogenförmigen Lagerfläche (52, 252, 352) um einen Abstand (A) an einem axialen Mittelpunkt des Lagers (20, 220, 320) verschoben ist, wenn der geteilte Innenring (50) konzentrisch mit dem Außenring (30, 230, 330) ist;
wobei der Abstand (A) definiert ist, um es der ersten Hälfte (53) und der zweiten Hälfte (51) des geteilten Innenrings (50) zu ermöglichen, durch eine erste Öffnung (40) in die Bohrung (34) des Außenrings (30, 230, 330) eingesetzt zu werden;
wobei ein axialer Zwischenraum (Y) definiert ist als der Abstand zwischen einem Ende der konkaven bogenförmigen Lagerfläche (32, 232, 332) und der konvexen bogenförmigen Lagerfläche (32, 232, 332) entlang einer Achse parallel zur Drehachse;
wobei der Krümmungsradius (Ro) der konkaven bogenförmigen Lagerfläche kleiner als der Krümmungsradius (R_{I}) der konvexen bogenförmigen Lagerfläche ist, und
wobei der axiale Zwischenraum kleiner als der axiale Zwischenraum eines Kugellagers ist, wobei der Krümmungsradius (Ro) der konkaven bogenförmigen Lagerfläche gleich oder grö-ßer als der Krümmungsradius (R_{I}) der konvexen bogenförmigen Lagerfläche ist.

## Revendications

1. Un palier (20, 220, 320) comprenant:
un anneau extérieur (30, 230, 330) définissant une surface de palier concave courbe (32, 232, 332) définissant un alésage (34) et ayant un rayon de courbure (Ro) selon une coupe axiale transversale du palier (20, 220, 320);
**caractérisé en ce qu'**un anneau intérieur fendu (50) est formé par une première moitié (53) et une deuxième moitié (51) séparées l'une de l'autre par une ligne de fracture (55), l'anneau intérieur fendu (50) définissant une surface de palier convexe courbe (52, 252, 352) ayant un rayon de courbure (R_{I}) selon une coupe transversale axiale du palier (20, 220, 320), l'anneau intérieur étant apte à tourner par rapport à l'anneau extérieur (30, 230, 330) selon un premier axe de rotation et l'anneau intérieur étant déplaçable angulairement par rapport à l'anneau extérieur (30, 230, 330) lorsque l'anneau intérieur est disposé dans l'anneau extérieur (30, 230, 330);
un vide en forme de croissant configuré pour retenir un lubrifiant étant défini entre la surface de palier concave courbe (32, 232, 332) et la surface de palier convexe courbe (52, 252, 352) entre deux points de contact (270, 272 et 370, 372) entre la surface de palier concave courbe (32, 232, 332) et la surface de palier convexe courbe (52, 252, 352) lorsque l'anneau extérieur (30, 230, 330) et l'anneau intérieur fendu (50) sont soumis à des forces de chargement (F1, F2);
la surface de palier concave courbe (32, 232, 332) est radialement déplacée de la surface de palier convexe courbe (52, 252, 352) sur une distance (A) au centre axial du palier (20, 220, 320) lorsque l'anneau intérieur fendu (50) est concentrique à l'anneau extérieur (30, 230, 330);
la distance (A) étant définie de façon à permettre à la première moitié (53) et à la deuxième moitié (51) de l'anneau intérieur fendu (50) d'être insérées à travers une première ouverture (40) aménagée dans le alésage (34) de l'anneau extérieur (30, 230, 330);
un jeu axial (Y) étant défini la distance entre une extrémité de la surface de palier concave courbe (32, 232, 332) et la surface de palier convexe courbe (32, 232, 332) selon un axe parallèle à l'axe de rotation;
le rayon de courbure (Ro) de la surface de palier concave courbe étant inférieur au rayon de courbure (R_{I}) de la surface de palier convexe courbe et
le jeu axial étant inférieur au jeu axial d'un appui sphérique, de sorte que le rayon de courbure (Ro) de la surface de palier concave courbe est égale ou supérieure au rayon de courbure (R_{I}) de la surface de palier convexe courbe.
